# EUROPÄISCHE PATENTANMELDUNG

(11) **EP 2 476 972 A1**
(43) Veröffentlichungstag der Anmeldung: **18.07.2012**
(21) Anmeldenummer: 11151150.7
(22) Anmeldetag: 17.01.2011
(51) Int. Cl.: F24J 2/52

(54) **Befestigungseinrichtung und Nutenstein für die Befestigung von Photovoltaikmodulen**

(71) Anmelder: PAIRAN GmbH, 37120 Bovenden (DE)
(72) Erfinder: Rach, Pavel, 46804 Jablonec nad Nisou (CZ); Vodicka, Jan, 506 01 Jicín (CZ)
(74) Vertreter: Rehberg Hüppe + Partner

(57) **Zusammenfassung**

Eine Befestigungseinrichtung (1) für die Befestigung eines Photovoltaikmoduls (2) oder eines Solarthermiemoduls an einer Modulschiene (3) weist einen Nutenstein (4) und eine Modulklemme (5) mit einer Durchgangsbohrung (23) und einer Befestigungsschraube (8) auf, wobei die Befestigungsschraube (8) durch die Durchgangsbohrung (23) hindurchragt und in eine korrespondierende Gewindebohrung (7) des Nutensteins (4) einschraubbar ist. Der Nutenstein (4) weist ein Federelement (11) und zwei Rastarme (18) auf, wobei die Rastarme (18) so mit dem Federelement (11) verbunden sind, dass der Nutenstein (4) mittels einer translatorischen Bewegung senkrecht zur Längsrichtung der Modulschiene (3) von oben in die Nut (20) der Modulschiene (3) einführbar ist und dabei die Rastarme (18) elastisch verschwenkt werden und in korrespondierende Hinterschneidungen (22) in der Nut (20) der Modulschiene (3) eingreifen.

## Beschreibung

### TECHNISCHES GEBIET DER ERFINDUNG

Die Erfindung betrifft eine Befestigungseinrichtung und einen Nutenstein für die Befestigung eines Photovoltaikmoduls oder eines Solarthermiemoduls an einer Modulschiene.

Die Erfindung betrifft weiterhin eine Modulschiene für die Befestigung eines Photovoltaikmoduls oder eines Solarthermiemoduls mittels eines Nutensteins.

Derartige Befestigungseinrichtungen und Nutensteine dienen meist zur Befestigung mehrerer Photovoltaikmodule oder Solarthermiemodule nebeneinander und übereinander, beispielsweise auf einem Hausdach. Dabei werden die Module mittels eines Nutensteins und einer mit diesem zusammenwirkenden Modulklemme an einer Modulschiene an dem Hausdach festgeschraubt, wobei die Modulschiene an dem Hausdach oder dergleichen montiert ist.

### STAND DER TECHNIK

Eine Befestigungseinrichtung und ein Nutenstein für die Befestigung eines Photovoltaikmoduls an einer Modulschiene sind aus dem deutschen Gebrauchsmuster DE 20 2005 000 485 U1 bekannt. Für die Befestigung des Nutensteins in der Modulschiene weist die Modulschiene zwei Nuten mit jeweils einer Hinterschneidung auf. Der Nutenstein wiederum besitzt eine L-förmige Gestalt und im Bereich des kürzeren Schenkels eine Ausnehmung zur Herstellung einer formschlüssigen Verbindung mit einer der Hinterschneidungen der Modulschiene. Am entgegengesetzten Ende des langen Schenkels ist ebenfalls eine Ausnehmung vorgesehen, die eine formschlüssige Verbindung mit der anderen Hinterschneidung bzw. Kröpfung der Modulschiene herstellt. Für die Montage des Nutensteins wird dieser zunächst von oben durch die Öffnung der Modulschiene in den Bereich der beiden Nuten eingeführt. Dies ist möglich, da die Breite des Nutensteins kleiner als die in diesem Bereich vorhandene Öffnungsbreite der Modulschiene ist. Anschließend wird der Nutenstein in der Modulschiene seitlich so verschoben, dass die beiden formschlüssigen Verbindungen hergestellt werden. In dieser Position wird der Nutenstein durch Einschrauben einer Befestigungsschraube fixiert, wobei das Gewinde der Befestigungsschraube dabei in eine der Hinterschneidungen bzw. Kröpfungen eingreift, die sich dabei leicht verformt.

Im Stand der Technik sind weiterhin Befestigungseinrichtungen und Nutensteine für die Befestigung von Photovoltaikmodulen oder Solarthermiemodulen an einer Modulschiene bekannt, bei denen der Nutenstein als Hammerkopfschraube ausgebildet ist. Die Hammerkopfschraube wird mittels einer Schwenkbewegung in die Nut der Modulschiene eingeführt. Nach dem Zurückschwenken greift die Hammerkopfschraube dann in die symmetrisch an beiden Seiten der Nut ausgebildeten Hinterschneidungen der Nut der Modulschiene ein.

### AUFGABE DER ERFINDUNG

Der Erfindung liegt die Aufgabe zugrunde, eine Befestigungseinrichtung, einen Nutenstein und eine Modulschiene für die Befestigung eines Photovoltaikmoduls oder eines Solarthermiemoduls bereitzustellen, mit denen eine einfache, sichere und dauerhaft zuverlässige Befestigung erreicht wird.

### LÖSUNG

Die Aufgabe der Erfindung wird erfindungsgemäß mit den Merkmalen der unabhängigen Patentansprüche gelöst.

### BESCHREIBUNG DER ERFINDUNG

Die Erfindung betrifft einen Nutenstein für die Befestigung eines Photovoltaikmoduls oder eines Solarthermiemoduls an einer Modulschiene mit einem Federelement und zwei Rastarmen, wobei die Rastarme so mit dem Federelement verbunden sind, dass der Nutenstein mittels einer translatorischen Bewegung senkrecht zur Längsrichtung der Modulschiene in die Nut der Modulschiene einführbar ist und dabei die Rastarme elastisch verschwenkt werden und in korrespondierende Hinterschneidungen in der Nut der Modulschiene eingreifen.

Die Erfindung betrifft weiterhin eine Befestigungseinrichtung für die Befestigung eines Photovoltaikmoduls oder eines Solarthermiemoduls an einer Modulschiene mit einem derartigen Nutenstein und einer Modulklemme mit einer Durchgangsbohrung und einer Befestigungsschraube, wobei die Befestigungsschraube durch die Durchgangsbohrung hindurchragt und in eine korrespondierende Gewindebohrung des Nutensteinkerns einschraubbar ist.

Die Erfindung betrifft auch eine Befestigungseinrichtung für die Befestigung eines Photovoltaikmoduls oder eines Solarthermiemoduls an einer Modulschiene mit einem derartigen Nutenstein und einer Modulschiene mit einer eine Hinterschneidung aufweisenden Nut.

Die Erfindung betrifft weiterhin eine Modulschiene für die Befestigung eines Photovoltaikmoduls oder eines Solarthermiemoduls mit einer sich in der Längsrichtung der Modulschiene erstreckenden Nut, die in den sich in der Querrichtung anschließenden Wandungen jeweils zwei Hinterschneidungen aufweist, die zur Aufnahme eines derartigen Nutensteins ausgebildet sind.

Die Erfindung betrifft ferner die Verwendung eines derartigen Nutensteins für die Befestigung eines Photovoltaikmoduls oder eines Solarthermiemoduls an einer Modulschiene.

Die Erfindung betrifft auch einen Nutenstein für die Befestigung eines Photovoltaikmoduls oder eines Solarthermiemoduls an einer Modulschiene mit einem im Bereich der Symmetrieachse mittig angeordneten Nutensteinkern und einem Federelement. Das Federelement ist derart angeordnet, dass die mit dem Federelement verbundenen zwei Rastarmen außerhalb der Symmetrieachse gegenüberliegend angeordnet sind und sich symmetrisch zu der Symmetrieachse erstrecken. Die Rastarme sind so mit dem Federelement verbunden, dass sie federnd nachgiebig in Richtung der Symmetrieachse verschwenkbar sind.

Mittels der erfindungsgemäßen Befestigungseinrichtung mit einem Nutenstein ist eine besonders einfache, sichere und dauerhaft zuverlässige Befestigung der Photovoltaikmodule oder Solarthermiemodule an der Modulschiene möglich. Das Federelement des Nutensteins in Verbindung mit den Rastarmen des Nutensteins und der darauf abgestimmten Gestalt der Nut der Modulschiene führen dazu, dass der Nutenstein mittels einer - aus Sicht des Monteurs - reinen translatorischen Bewegung senkrecht zur Längsrichtung der Modulschiene von oben in die Nut der Modulschiene einführbar ist. Anders gesagt muss der Monteur den Nutenstein lediglich von oben gerade in die Modulschiene eindrücken, wobei er eine automatische Rückmeldung über die Erreichung dieses vorläufigen Montagezustands erhält, indem er akustisch und sensorisch das Einrasten der Rastarme in den korrespondierenden Hinterschneidungen in der Nut der Modulschiene wahrnimmt.

In dieser Weise ist eine Fehlmontage aus mehreren Gründen nahezu ausgeschlossen. Zunächst ist keine besondere Geschicklichkeit erforderlich, da im Gegensatz zum Stand der Technik keine rotatorische Bewegung oder mehrere in unterschiedliche Richtungen gerichtete translatorischen Bewegungen erforderlich sind, sondern lediglich eine einfache translatorische Bewegung ausreicht. Da der Nutenstein vorzugsweise symmetrisch zu seiner Längsmittelachse ausgebildet ist, kann er auch nur lagerichtig in die Nut der Modulschiene eingeführt werden. Auch hierdurch wird die Montage vereinfacht und beschleunigt.

Die oberhalb genannte translatorische Bewegung wird also durch den Monteur ausgeführt. Dies bedeutet nicht, dass Teile des Nutensteins nicht auch einer anderen Art einer Bewegung ausgesetzt sein können. Vielmehr ist es so, dass die Rastarme beim Eindrücken des Nutensteins in die Nut der Modulschiene zunächst nach innen gedrückt und in diese Richtung verschwenkt werden, bis die Rastarme die Hinterschneidungen in der Nut der Modulschiene passiert haben und mittels einer nun auswärts gerichteten Schwenkbewegung in die Hinterschneidungen eingreifen. Anders gesagt unterliegen somit die Rastarme des Nutensteins einer rotatorischen Bewegung während des Montagevorgangs.

Der Nutenstein weist vorzugsweise einen Nutensteinkern auf, wobei in der befestigten Stellung des Nutensteinkerns in der Modulschiene der Nutensteinkern zur Kraftübertragung mit den Rastarmen in Verbindung steht. Diese Verbindung zwischen Nutensteinkern und Rastarmen gewährleistet, dass die sichere Befestigung des Nutensteins in der Modulschiene unabhängig von dem Vorhandensein bzw. der Unversehrtheit des Federelements gewährleistet ist. Das Federelement muss also nur bei der Montage sicherstellen, dass die gewünschte eingerastete Stellung der Rastarme in den Hinterschneidungen der Nut der Modulschiene erreicht wird. Beim späteren Anziehen der Verbindung durch Einschrauben der Befestigungsschraube in die zugehörige Gewindebohrung des Nutensteinkerns wird der Nutensteinkern in Richtung der Rastarme bewegt und diese miteinander verspannt. Es ist dann nicht mehr von Bedeutung, ob die Federelemente vorhanden sind, da die Kraft sicher über die entsprechend dimensionierten Rastarme und den Nutensteinkern übertragen wird.

Das Federelement kann mit dem Nutensteinkern verbunden sein. Da die Rastarme wiederum mit dem Federelement verbunden sind, besteht somit insgesamt eine Verbindung zwischen Nutensteinkern, Federelement und Rastarmen. Es ist jedoch ebenfalls möglich, das Federelement als separates Bauteil auszubilden, welches insbesondere nicht mit dem Nutensteinkern verbunden ist.

Es können zwei Federelemente vorgesehen sein, die sich symmetrisch zu beiden Seiten des Nutensteinkerns von diesem weg erstrecken, wobei jedes der Federelemente als dünnwandiger Materialstreifen ausgebildet ist und zwei Abschnitte aufweist. Der erste Abschnitt erstreckt sich dabei aus der Längsmittelebene des Nutensteins von der Unterseite des Nutensteinkerns weg parallel zur Oberseite des Nutensteinkerns. Der zweite Abschnitt schließt senkrecht an den ersten Abschnitt an und erstreckt sich senkrecht zur und in Richtung der Oberseite des Nutensteinkerns. In dieser Weise sind der Nutensteinkern und die Federelemente und ggf. auch die Rastarme einstückig ausgebildet. Die Rastarme können dabei jeweils mit dem dem ersten Abschnitt abgewandten Ende des zweiten Abschnitts der Federelemente verbunden sein. Es ist jedoch ebenfalls möglich, die zuvor genannten Bauteile separat auszubilden.

Die Rastarme können jeweils zwei Rasthaken aufweisen, die am Ende der translatorischen Bewegung in zwei korrespondierende Hinterschneidungen in der Nut der Modulschiene eingreifen.

Der Nutenstein kann beispielsweise aus einem Aluminiumstrangprofil oder auch durch Druckguss oder Zinkguss hergestellt oder als Kunststoffteil ausgebildet sein, welches insbesondere durch Spritzguss hergestellt wird. Insbesondere besteht der Nutenstein aus einer Aluminiumlegierung.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Federelement die Rede ist, ist dies so zu verstehen, dass genau ein Federelement, zwei Federelemente oder mehr Federelemente vorhanden sind. Wenn hingegen nur die genaue Anzahl eines Merkmals angegeben werden soll, findet das Adjektiv "genau" vor dem jeweiligen Merkmal Verwendung.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine Schnittansicht einer neuen Befestigungseinrichtung für die Befestigung eines Photovoltaikmoduls oder eines Solarthermiemoduls an einer Modulschiene gemäß Linie A-A in Fig. 2.
- **Fig. 2**: zeigt eine Schnittansicht der Befestigungseinrichtung gemäß Fig. 1 gemäß Linie B-B in Fig. 1.
- **Fig. 3**: zeigt eine perspektivische Ansicht eines neuen Nutensteins für die Befestigung eines Photovoltaikmoduls oder eines Solarthermiemoduls an einer Modulschiene.

- **Fig. 4**: zeigt eine Vorderansicht des Nutensteins gemäß Fig. 3.
- **Fig. 5**: zeigt eine Draufsicht des Nutensteins gemäß Fig. 3.
- **Fig. 6**: zeigt eine perspektivische Ansicht einer neuen Modulklemme für die Befestigung eines Photovoltaikmoduls oder eines Solarthermiemoduls.
- **Fig. 7**: zeigt eine Draufsicht der Modulklemme gemäß Fig. 6.
- **Fig. 8**: zeigt eine Schnittansicht der Modulklemme gemäß Fig. 6 gemäß Linie A-A in **Fig. 7**.

### FIGURENBESCHREIBUNG

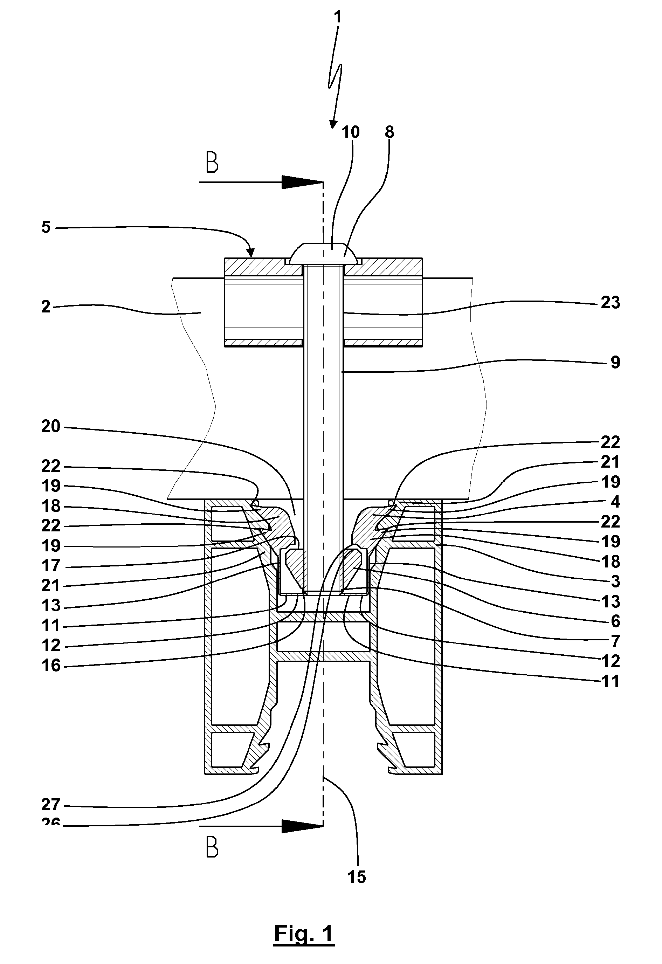

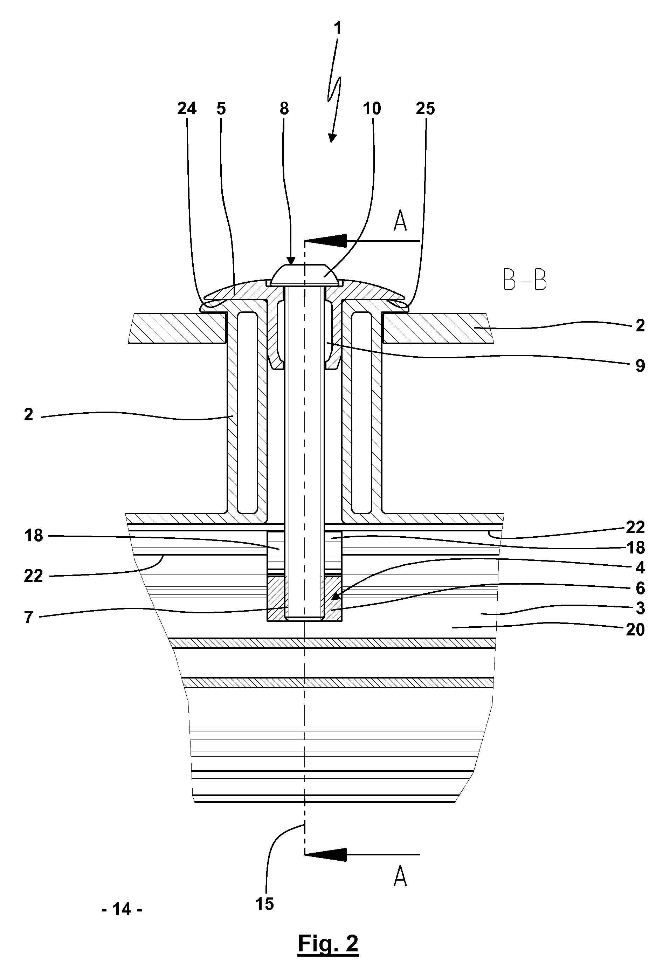

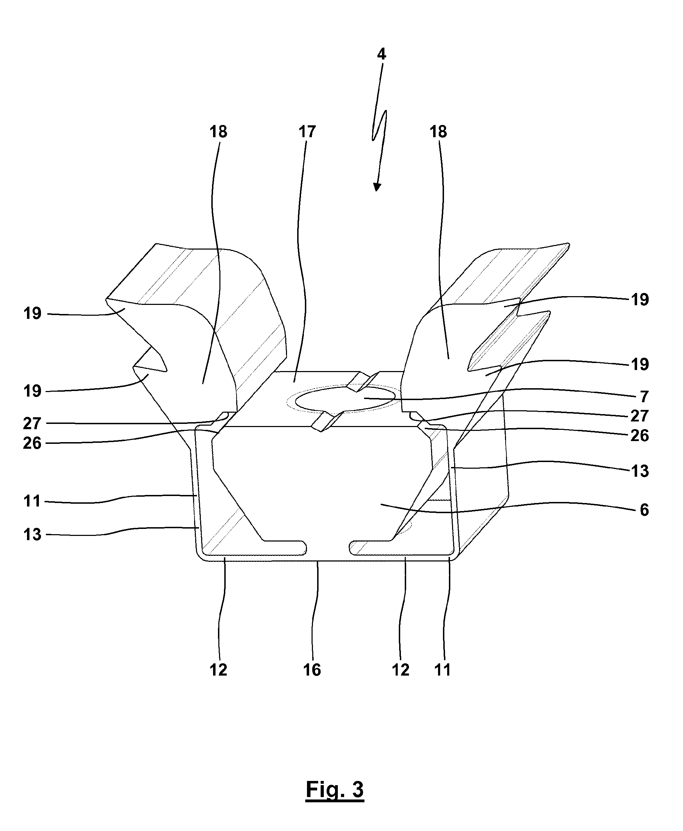

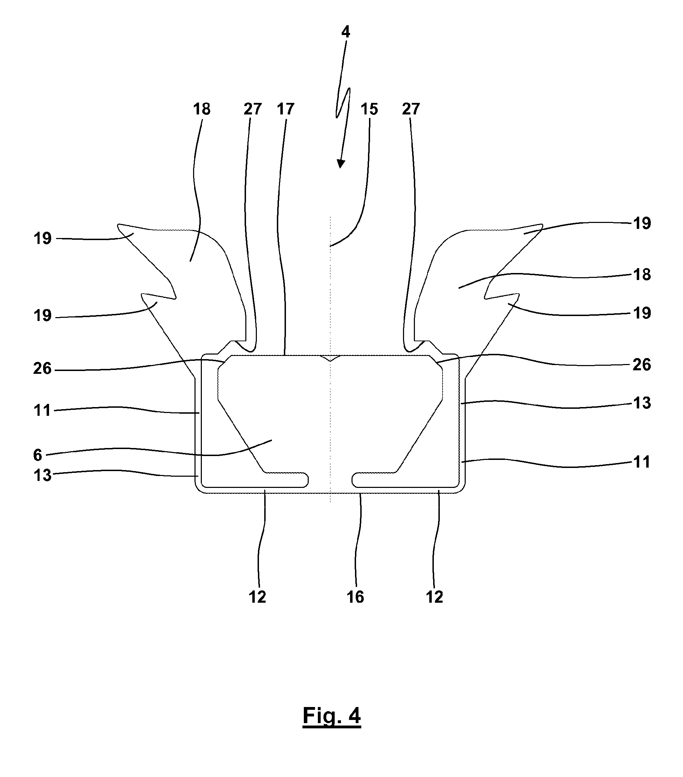

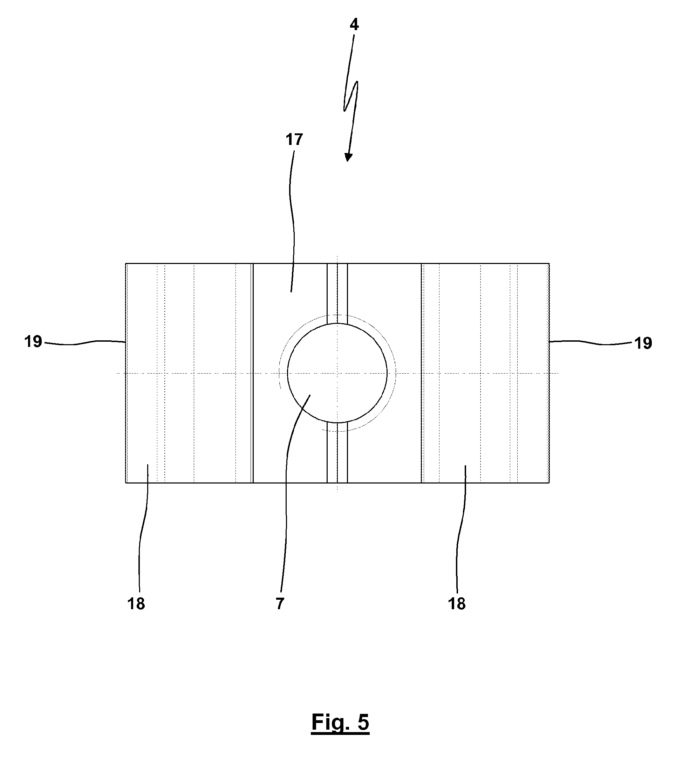

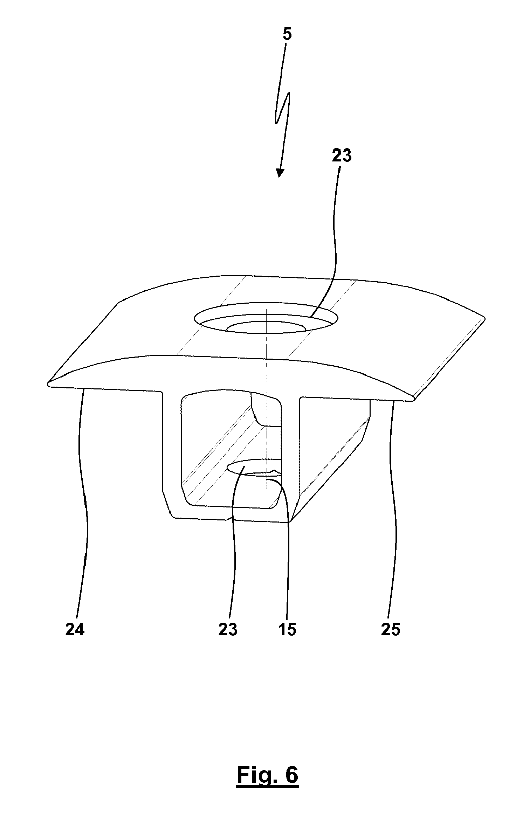

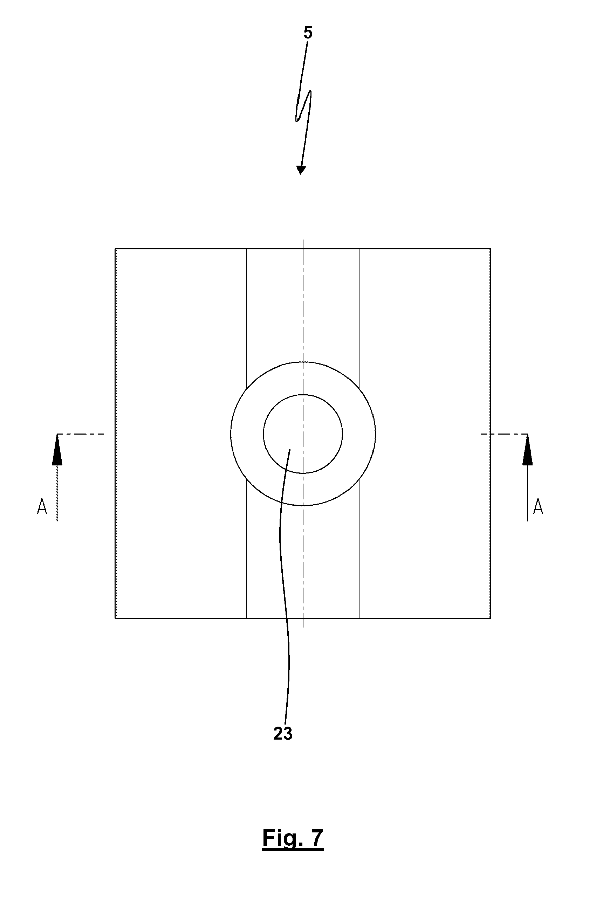

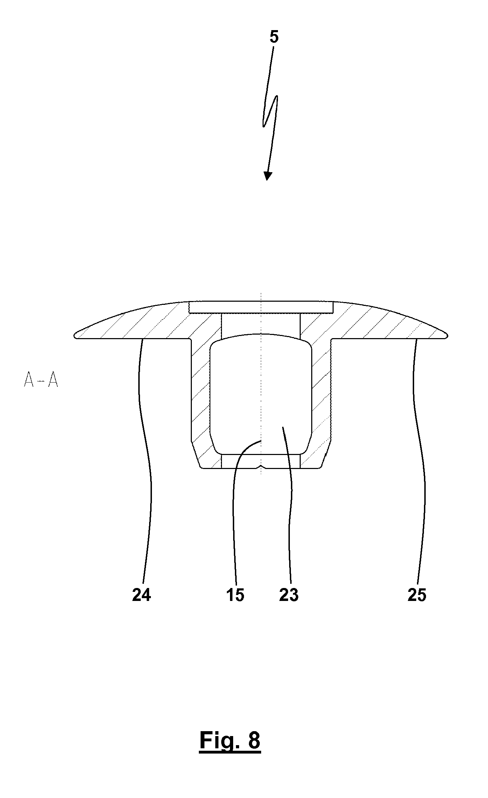

**Fig. 1** und **2** zeigen zwei Schnittansichten einer neuen Befestigungseinrichtung 1 für die Befestigung eines Photovoltaikmoduls 2 oder eines Solarthermiemoduls an einer Modulschiene 3. Die Befestigungseinrichtung **1** weist einen Nutenstein **4** und eine Modulklemme 5 auf, wobei Details des Nutensteins 4 in den **Fig. 3** bis **5** und Details der Modulklemme 5 in den **Fig. 6** bis **8** dargestellt sind.

Die Befestigungseinrichtung 1 dient zur Befestigung mehrerer Photovoltaikmodule 2 oder Solarthermiemodule nebeneinander und übereinander, beispielsweise auf einem Hausdach. Die Modulschiene 3 ist dabei direkt oder indirekt mit dem Hausdach verbunden, wobei die Art dieser Befestigung für die vorliegende Erfindung von untergeordneter Bedeutung ist und dem Stand der Technik entspricht, weshalb auf weitere detaillierte diesbezügliche Erläuterungen verzichtet werden kann.

Zur Beschreibung der neuen Befestigungseinrichtung 1 und deren Elementen wird im Folgenden auf sämtliche Fig. 1 bis 8 Bezug genommen.

Der Nutenstein 4 weist einen Nutensteinkern 6 mit einer Gewindebohrung 7 auf, die als Durchgangsbohrung ausgebildet ist. Eine Befestigungsschraube 8 weist ein Gewinde 9 auf, welches korrespondierend zu dem Gewinde der Gewindebohrung 7 ausgebildet und in dieses eingeschraubt ist. Im vorliegenden Fall handelt es sich jeweils um ein metrisches Gewinde, wobei auch eine andere Gewindegeometrie gewählt werden kann. Die Befestigungsschraube 9 weist weiterhin einen Kopf 10 mit einer (nicht dargestellten) Kraftangriffsfläche, insbesondere einem Innensechskant, auf.

Der Nutenstein 4 weist zwei Federelemente 11 auf, die sich symmetrisch zu beiden Seiten des Nutensteinkerns 6 von diesem weg erstrecken, wobei jedes der Federelemente 11 im vorliegenden Beispiel als dünnwandiger Materialstreifen ausgebildet ist und zwei Abschnitte 12, 13 aufweist. Der erste Abschnitt 12 erstreckt sich dabei aus der der Zeichenebene der Fig. 2 entsprechenden Längsmittelebene 14 von der Symmetrieachse 15 und der Unterseite 16 des Nutensteinkerns 6 weg parallel zur Oberseite 17 des Nutensteinkerns 6. Der zweite Abschnitt 13 schließt senkrecht an den ersten Abschnitt 12 an und erstreckt sich senkrecht zur und in Richtung der Oberseite 17 des Nutensteins 4.

Im Anschluss daran sind jeweils Rastarme 18 angeordnet, die mit dem jeweiligen Federelement 11 verbunden sind. Die Rastarme 18 weisen jeweils zwei Rasthaken 19 auf, wobei auch nur ein Rasthaken 19 oder auch drei oder mehr Rasthaken 19 vorgesehen sein können.

Der Nutenstein 4 ist in seiner in der Modulschiene 3 vormontierten und somit in der vormontierten Stellung der Befestigungseinrichtung 1 dargestellt. Die Modulschiene 3 ist in besonderer Weise für ein Zusammenwirken mit dem Nutenstein 4 ausgebildet. Die Modulschiene 3 weist eine sich entlang ihrer Haupterstreckungsrichtung erstreckende Nut 20 auf. Die Nut 20 weist in den sich in der Querrichtung senkrecht zur Haupterstreckungsrichtung anschließenden Wandungen 21 jeweils zwei Hinterschneidungen 22 auf. Die Hinterschneidungen 22 dienen zur Aufnahme der Rasthaken 19 der Rastarme 18 des Nutensteinkerns 4 und sind geometrisch auf diese abgestimmt. Dementsprechend können in Abstimmung mit der Anzahl und Anordnung der Rasthaken 19 auch mehr oder weniger Hinterschneidungen 22 vorhanden sein.

In ihrem oberen Bereich weist die Befestigungseinrichtung 1 die Modulklemme 5 auf. Die Modulklemme 5 weist eine gewindelose Durchgangsbohrung 23 auf, durch die die Befestigungsschraube 8 hindurchgeführt ist. Die Modulklemme 5 weist weiterhin einen ersten Befestigungsabschnitt 24 und einen zweiten Befestigungsabschnitt 25 auf, die letztendlich zur Kraftübertragung auf die Photovoltaikmodule 2 dienen, indem flächiger Kontakt zwischen den Befestigungsabschnitten 24, 25 und dem jeweiligen Photovoltaikmodul 2 besteht.

Für die Befestigung der Photovoltaikmodule 2 an der Modulschiene 3 wird wie folgt vorgegangen:
Die Photovoltaikmodule 2 werden durch den Monteur auf die Modulschiene 3 aufgelegt und die Befestigungseinrichtung 1 mit der Modulklemme 5, der Befestigungsschraube 8 und dem Nutenstein 4 von oben in Richtung auf die Nut 20 der Modulschiene 3 bewegt. Die Befestigungsschraube 8 ist dabei bereits teilweise in den Nutenstein 4 bzw. die Gewindebohrung 7 des Nutensteinkerns 6 eingeschraubt. Aus der Sicht des Monteurs handelt es sich bei dieser Bewegung um eine reine translatorische Bewegung, d. h. der Monteur drückt die Befestigungseinrichtung 1 und damit den Nutenstein 4 gerade von oben in Richtung der Symmetrieachse 15 in die Nut 20 der Modulschiene 3 ein.

Vor dem Eintritt der Rastarme 18 weisen diese zumindest in einem Teil einen größeren Außendurchmesser als die Nut 20 in ihrem oberen Bereich auf. Dies bedeutet, dass die Rastarme 18 beim Einführen in die Nut 20 an der Wandung 21 entlanggleiten und dabei aufgrund der Nachgiebigkeit der Federelemente 11 nach innen verschwenken. Insbesondere ist dies so realisiert, dass die unteren Rasthaken 19 auf der entsprechenden inneren Oberfläche der Wandung 21 der Modulschiene 3 aufgleiten, bis sie den Bereich des kleinsten Durchmessers in axialer Richtung nach unten hin verlassen haben. Aufgrund der Federwirkung der Federelemente 11 greifen sie dann in die entsprechende Hinterschneidung 22 ein und schnappen dabei aufgrund des dort vergrößerten Durchmessers nach außen zurück.

Die obere Hinterschneidung 22 und der obere Rastarm 18 sind dabei so auf die untere Hinterschneidung 22 und den unteren Rasthaken 19 abgestimmt, dass diese gleichzeitig in Wirkkontakt gelangen. In dieser Weise wird die vormontierte Stellung der Befestigungseinrichtung 1 erreicht, wie sie in den Fig. 1 und 2 dargestellt ist.

Für die Endmontage wird dann die Befestigungsschraube 8 über die im Kopf 9 angeordnete Kraftangriffsfläche weiter in die Gewindebohrung 7 des Nutensteinkerns 6 eingeschraubt und somit die Schraubverbindung angezogen. Sobald die Endposition der Befestigungsabschnitte 24, 25 der Modulklemme 6 auf der Oberseite der Photovoltaikmodule 2 erreicht wurde, wird beim fortgesetzten Einschrauben der Befestigungsschraube 8 der Nutensteinkern 6 in axialer Richtung nach oben bewegt. Dabei kontaktiert der Nutensteinkern 6 mit seinen oberen äußeren Bereichen die Rastarme 18, so dass in der befestigten Stellung des Nutensteins 4 in der Modulschiene 3 der Nutensteinkern 6 zur Kraftübertragung mit den Rastarmen 18 in Verbindung steht. Die Federelemente 11 werden also in der fertig angezogenen bzw. endgültig befestigten Stellung des Nutensteins 4 nicht für die Kraftübertragung benötigt, so dass z. B. ein Brechen der Federelemente 11 keinen Einfluss auf die Sicherheit der Befestigung der Befestigungseinrichtung 1 besitzt.

Für den sicheren Kontakt zwischen dem Nutensteinkern 6 und den Rastarmen 18 besitzt der Nutensteinkern 6 Kraftangriffsflächen 26, die korrespondierend zu den Kraftangriffsflächen 27 der Rastarme 18 ausgebildet sind.

### BEZUGSZEICHENLISTE

- 1: Befestigungseinrichtung
- 2: Photovoltaikmodul
- 3: Modulschiene
- 4: Nutenstein
- 5: Modulklemme
- 6: Nutensteinkern
- 7: Gewindebohrung
- 8: Befestigungsschraube
- 9: Gewinde
- 10: Kopf
- 11: Federelement
- 12: erster Abschnitt
- 13: zweiter Abschnitt
- 14: Längsmittelebene
- 15: Symmetrieachse
- 16: Unterseite
- 17: Oberseite
- 18: Rastarm
- 19: Rasthaken
- 20: Nut
- 21: Wandung
- 22: Hinterschneidung
- 23: Durchgangsbohrung
- 24: erster Befestigungsabschnitt
- 25: zweiter Befestigungsabschnitt
- 26: Kraftangriffsfläche
- 27: Kraftangriffsfläche

## Patentansprüche

1. Nutenstein (4) für die Befestigung eines Photovoltaikmoduls (2) oder eines Solarthermiemoduls an einer Modulschiene (3), mit
einem Federelement (11), und
zwei Rastarmen (18), wobei die Rastarme (18) so mit dem Federelement (11) verbunden sind, dass der Nutenstein (4) mittels einer translatorischen Bewegung senkrecht zur Längsrichtung der Modulschiene (3) in die Nut (20) der Modulschiene (3) einführbar ist und die Rastarme (18) dabei elastisch verschwenkt werden und in korrespondierende Hinterschneidungen (22) in der Nut (20) der Modulschiene (3) eingreifen.

2. Nutenstein (4) nach Anspruch 1, weiterhin **gekennzeichnet durch**
einen Nutensteinkern (6), wobei in der befestigten Stellung des Nutensteins (4) in der Modulschiene (3) der Nutensteinkern (6) zur Kraftübertragung mit den Rastarmen (18) in Verbindung steht.

3. Nutenstein (4) nach Anspruch 2, **dadurch gekennzeichnet, dass** das Federelement (11) mit dem Nutensteinkern (6) verbunden ist.

4. Nutenstein (4) nach Anspruch 3, **dadurch gekennzeichnet, dass** zwei Federelemente (11) vorgesehen sind, die sich symmetrisch zu beiden Seiten des Nutensteinkerns (6) von diesem weg erstrecken, wobei jedes der Federelemente (11) als dünnwandiger Materialstreifen ausgebildet ist und zwei Abschnitte (12, 13) aufweist, wobei
sich der erste Abschnitt (12) aus der Längsmittelebene (14) des Nutensteins (4) von der Unterseite (16) des Nutensteinkerns (6) weg parallel zur Oberseite (17) des Nutensteins (4) erstreckt, und
der zweite Abschnitt (13) senkrecht an den ersten Abschnitt (12) anschließt und sich senkrecht zur und in Richtung der Oberseite (17) des Nutensteins (4) erstreckt.

5. Nutenstein (4) nach Anspruch 4, **dadurch gekennzeichnet, dass** die Rastarme (18) jeweils mit dem dem ersten Abschnitt (12) abgewandten Ende des zweiten Abschnitts (13) der Federelemente (11) verbunden sind.

6. Nutenstein (4) nach mindestens einem der vorhergehenden Ansprüche, **dadurch gekennzeichnet, dass** die Rastarme (18) jeweils zwei Rasthaken (19) aufweisen, die am Ende der translatorischen Bewegung in zwei korrespondierende Hinterschneidungen (22) in der Nut (20) der Modulschiene (3) eingreifen.

7. Nutenstein (4) nach mindestens einem der vorhergehenden Ansprüche, **gekennzeichnet durch** einen im Bereich der Symmetrieachse (15) mittig angeordneten Nutensteinkern (6), wobei
das Federelement (11) derart angeordnet ist, dass die mit dem Federelement (11) verbundenen zwei Rastarmen (18) außerhalb der Symmetrieachse (15) gegenüberliegend angeordnet sind und sich symmetrisch zu der Symmetrieachse (15) erstrecken, und
die Rastarme (18) so mit dem Federelement (11) verbunden sind, dass sie federnd nachgiebig in Richtung der Symmetrieachse (15) verschwenkbar sind.

8. Befestigungseinrichtung (1) für die Befestigung eines Photovoltaikmoduls (2) oder eines Solarthermiemoduls an einer Modulschiene (3), mit
einem Nutenstein (4) nach mindestens einem der Ansprüche 2 bis 7, und
einer Modulklemme (5) mit einer Durchgangsbohrung (23) und einer Befestigungsschraube (8), wobei die Befestigungsschraube (8) durch die Durchgangsbohrung (23) hindurchragt und in eine korrespondierende Gewindebohrung (7) des Nutensteinkerns (6) einschraubbar ist.

9. Befestigungseinrichtung (1) nach Anspruch 8, **gekennzeichnet durch** eine Modulschiene (3) mit einer eine Hinterschneidung (22) aufweisenden Nut (20).

10. Befestigungseinrichtung (1) für die Befestigung eines Photovoltaikmoduls (2) oder eines Solarthermiemoduls an einer Modulschiene (3), mit
einem Nutenstein (4) nach mindestens einem der Ansprüche 1 bis 7, und
einer Modulschiene (3) mit einer eine Hinterschneidung (22) aufweisenden Nut (20).

11. Modulschiene (3) für die Befestigung eines Photovoltaikmoduls (2) oder eines Solarthermiemoduls, mit
einer sich in der Längsrichtung der Modulschiene (3) erstreckenden Nut (20), die in den sich in der Querrichtung anschließenden Wandungen (21) jeweils zwei Hinterschneidungen (22) aufweist, die zur Aufnahme eines Nutensteins (4) nach mindestens einem der Ansprüche 1 bis 7 ausgebildet sind.

12. Verwendung eines Nutensteins (4) nach mindestens einem der Ansprüche 1 bis 7 für die Befestigung eines Photovoltaikmoduls (2) oder eines Solarthermiemoduls an einer Modulschiene (3).
